# EUROPEAN PATENT SPECIFICATION

(11) **EP 1 370 408 B1**
(45) Date of publication and mention of the grant of the patent: **02.12.2009**
(21) Application number: 02706523.4
(22) Date of filing: 22.03.2002
(51) Int. Cl.: B29D 11/00, B29C 45/56

(54) **INJECTION MOLDING METHOD**
SPRITZGIESSVERFAHREN
PROCEDE DE MOULAGE PAR INJECTION

(30) Priority: 23.03.2001 AU PR393001
(43) Date of publication of application: 17.12.2003
(73) Proprietor: Carl Zeiss Vision Australia Holdings Ltd., Lonsdale, SA 5160 (AU)
(72) Inventor: MCCAFFREY, Nicholas, John, Burwood Victoria 3135 (AU); WALLACE, Mark, A., Morphett Vale, South Australia 5162 (AU); HENDERSON, David, Scott, North Adelaide, South Australia 5006 (AU)
(74) Representative: Stevens, Jason Paul
(86) International application number: PCT/AU2002/000345
(87) International publication number: WO 2002/076713

(56) References cited:
- EP-A- 0 144 622
- WO-A-00/71331
- WO-A-00/71331
- WO-A-99/54112
- US-A- 4 828 769
- US-A- 4 836 960
- US-A- 5 399 303
- US-A- 5 415 817
- PATENT ABSTRACTS OF JAPAN vol. 016, no. 184 (M-1243), 6 May 1992 (1992-05-06) & JP 04 022614 A (OLYMPUS OPTICAL CO LTD), 27 January 1992 (1992-01-27) -& DATABASE WPI Section Ch, Week 199210 Derwent Publications Ltd., London, GB; Class A32, AN 1992-077098 XP002373286 & JP 04 022614 A (OLYMPUS OPTICAL CO LTD) 27 January 1992 (1992-01-27)
- PATENT ABSTRACTS OF JAPAN vol. 1998, no. 01, 30 January 1998 (1998-01-30) & JP 09 248844 A (TORAY IND INC), 22 September 1997 (1997-09-22) -& DATABASE WPI Section Ch, Week 199210 Derwent Publications Ltd., London, GB; Class A32, AN 1992-077098 XP002373287 & JP 04 022614 A (OLYMPUS OPTICAL CO LTD) 27 January 1992 (1992-01-27)
- PATENT ABSTRACTS OF JAPAN vol. 017, no. 576 (M-1499), 20 October 1993 (1993-10-20) -& JP 05 169477 A (TOYODA GOSEI CO LTD), 9 July 1993 (1993-07-09)

## Description

The present invention relates to a method of molding an optical lens utilising an injection molding system, in particular a high powered and/or highly curved lens or very thin lens.

Numerous methods of molding an article including an optical article are known in the prior art.

Lenses are used for a variety of purposes, for example in optical devices such as microscopes and eye glasses. Over the past few years, the use of thermoplastic material to prepare ophthalmic lenses for such uses as in vision corrective and in prescriptive (Rₓ) spectacle lenses as opposed to traditional glass lenses has increased dramatically because thermoplastic lenses offer several advantages over glass. For example, plastic is lighter than glass and hence spectacles with plastic lens are more comfortable to wear especially since the nominal lens thickness is typically 1.5 to 2.0 mm at the centre of a minus power lens, or at the edge of a plus power lens. Other factors for increased demand for thermoplastic lenses are that these lenses can be made scratch and abrasion resistant, they come in a wide range of fashionable colours, and because the production techniques have improved so that they can now be manufactured at higher rates and in a more automated fashion.

Of the thermoplastic lenses, the use of polycarbonate thermoplastic is becoming very attractive as compared to, for example, lenses made from individual casting and thermoset-peroxide curing allylic resins. Factors favouring polycarbonate thermoplastic lenses include lower density and higher refractive index than cast-thermoset plastic. Hence, thinner lenses in the range of 1.0 to 2.0 mm thickness for a minus power lens can be made. In addition, polycarbonate lenses of the same nominal thickness as thermoset-peroxide cured allylic resins will be of lighter weight, due to lower density, and therefore will impart greater wearer comfort. Furthermore, polycarbonate thermoplastic lenses have far greater impact and breakage resistance than any other optical grade polymeric material.

Heretofore, thermoplastic, injection-molded lenses have been manufactured by injection molding with or without any compression. Injection molding without any compression typically involves the use of a mold cavity having fixed surfaces throughout the molding cycle. Such molding processes employ very long molding cycles, high mold-surface temperatures, higher than average plastication and melt temperatures for that given resin, and slow controlled fill rates followed by very high packing pressures which are held until gate freeze-off is complete.

Early attempts in the prior art to make acrylic or polycarbonate optical articles utilised injection molding with the mold cavity surfaces fixed throughout the molding cycle. This required long cycles, high mold surface temperatures approaching the glass-transition temperature of the plastic, along with high plastication and melt temperatures. However differing cross-sectional thicknesses for example cause non-uniform flow in the lens cavity leading to cosmetic defects and resulting differential shrinkage during part formation and subsequent cooling.

Gate freeze-off in a fixed cavity injection machine presents a problem, given that powered lenses have differing front and back radii of curvature, prescription lenses must therefore have differing cross-sectional thicknesses which in turn leads to non-uniform shrinkage during part formation in the mold cavity and cooling-down which can cause poor optics and/or distortion. In addition, the thickest sections of the lens are subject to slight sink marks or depressions which in turn cause a break in the otherwise uniform radius of curvature of the lens surface. This break results in a localized aberration or deviation in the light bending character of the lens at that area of sink.

One attempt in the prior art to overcome these difficulties is suggested by United States patent 4,828,769 to Galic and Maus (Galic). The Galic patent utilises an injection molding machine in which an opposing pair of mold inserts are initially separated to form a pre-enlarged cavity. A volume of plasticised resin is then injected into the mold cavity and a main clamp force applied to reduce the volume of the mold cavity. The applied main clamp force is maintained until a final lock-up position is reached. The final molded article dimensions being determined by the setable mechanical limits of the machine. However difficulties with the Galic system include an inability to permit uniform shrinkage leading to unwanted stress and optical defects. These are particularly harmful in an optical article exhibiting high curvature and/or low thickness.

Other prior art methods for moulding lenses are disclosed in WO 00/71331, US 5415817 and JP 04-022614.

It is accordingly an object of the present invention to overcome, or at least alleviate, one or more of the difficulties and deficiencies that relate to the prior art.

Accordingly, in a first aspect of the present invention there is provided a method of moulding an optical lens from a molten thermoplastic resin material using an injection moulding machine which has a power cylinder for providing a variable compression stroke during moulding, said method including the steps of:
providing a mould cavity defined by a pair of opposed, spaced apart inserts shaped and configured to define opposite faces of said optical lens and having a plurality of overflow wells surrounding said mould cavity;
adjusting the distance by which said inserts are spaced from each other;
determining for a particular lens configuration, an optimum volume of resin material to be introduced into the mould cavity, and an optimum processing time;
initiating an injection stroke to introduce said optimum volume of resin material into said mould cavity;
once a significant volume of resin material has been introduced into said cavity but prior to the completion of said injection stroke, beginning a compression stroke of said power cylinder, said compression stroke effecting movement of at least one of said inserts towards the other, said compression stroke being conducted at a high velocity, thus urging said excess resin material from said cavity into said overflow wells;
initiating a supplemental coining or lenticular coining step, the supplemental coining step functioning to apply compressive force to the edge of the optical lens;
varying the primary compressive force generated by said compression stroke to a predetermined secondary level of compressive force selected to provide improved properties to said optical lens, the secondary level compressive force being greater than or less than the primary compressive force;
maintaining the secondary compressive force on said mould cavity and simultaneously cooling the resin material, or allowing the resin material to cool, below its solidification temperature, the time taken from the start of the compression stroke until the resin material has cooled being in accordance with said optimum processing time; and
ejecting the moulded optical lens from the cavity.

It will be understood that in accordance with the molding method according to the present invention, the molding method exhibits a variable pressure profile which permits internal stresses, and thus optical defects, to be significantly reduced. Similarly, by initiating the compression stroke just prior to the completion of the injection stroke, the propensity of the injection system to produce an unwanted flow line on the surface of the lens is substantially reduced or eliminated.

The secondary coining step functions to apply compressive force to the edge of the lens, for example to the thick edge of a minus powered lens. This permits greater control of the dimensions of the lens at the periphery thereof, particularly to compensate for shrinkage.

A relatively high compression velocity is required to avoid the development of high internal stresses, and associated distortion, due to freezing off of the cross-section of the lens during the compression phase. The freezing time of thermoplastics increases rapidly as the thickness is reduced. This causes a reduction in the cross-sectional area available for the molten plastic to flow. High shear stresses can develop in the frozen region, leading to part distortion and cosmetic defects. In extreme cases, if the rapid freezing causes the cross-section to completely freeze, a short shot, defective part will result.

For example, the molding apparatus according to the present invention may exhibit a compression velocity of approximately 0.5 to 30 mm/sec, more preferably approximately 5 to 10 mm/sec.

Similarly, since both the pressure profile and processing time at each stage is precisely controlled, the final dimensions of a range of optical articles, e.g. optical lenses, may be produced within very tight tolerances and exhibiting high optical quality.

In one embodiment, when the molding apparatus utilised in accordance with the method according to the present invention may permit control of the compressive force applied by the compression stroke, it is necessary to generate a high primary compressive force to provide the required high velocity, e.g. to both squeeze excess material out of the cavity and compress the molten material to compensate for low shrinkage on cooling.

Accordingly, the primary compressive force is subsequently reduced in a controlled manner, preferably in a tapered or step-wise manner, to the required selected secondary selected level compressive force.

In an alternative embodiment, when the molding apparatus utilised permits control of both the velocity and compressive force of the compression stroke independently, it is preferred to maintain the primary compressive force at a low level and to subsequently increase the primary compressive force to the secondary level compressive force relatively rapidly.

In a preferred embodiment, for example where the optical lens to be molded is a minus (-) lens, the secondary compressive force may be reduced towards the end of the molding cycle.

Accordingly, the molding method may further include, when the optical lens is a minus powered lens, once a substantial portion of the centre thickness of the lens has frozen, reducing the compressive force to a predetermined final level sufficient to maintain contact between the optical inserts and the molded optical lens.

It has been found that, in order to minimise, or at least reduce, the level of compression defects when molding minus lenses it is preferred to reduce the compression force to a lower level, but which is sufficient to ensure contact is maintained. For example, for a -1.50 D optical lens a secondary compressive force of approximately 250 to 400 kN, preferably approximately 275 to 350 kN, has been found to be suitable.

The final compressive force may be reduced to approximately 100 to 200 kN, preferably approximately 100 to 150 kN, towards the end of the molding cycle, that is when the central portion of the thickness of the lens has been substantially frozen, e.g. after approximately 10 seconds for a minus powered lens with a final centre thickness of about 1.8 mm.

The optical lenses molded in accordance with the present invention may be lenses of relatively high base curve, for example approximately 9.00 D and above, and of relatively thin wall thickness, e. g. approximately 1.0 mm to approximately 2.0 mm in the centre of a minus powered lens, or at the edge of a plus powered lens.

The supplemental coining step includes initiating a supplementary compressive force directed towards the periphery of the lens, coincident with, or subsequent to, initiation of said primary compressive force.

The supplementary compressive force may be provided in any suitable manner. The supplementary compressive force may be applied utilising one or more injectors which inject further thermoplastic resin material from the injection molding machine into the mold cavity. Alternatively a supplementary clamping or hydraulic force may be provided.

It will be understood that the method of molding an optical lens may function as follows. Depending on the curvature of the lens, and wall thickness required, a pair of opposed optical inserts are shaped and configured to define opposite faces of said optical lens. The initial cavity centre thickness is predetermined to give optimum molding conditions and set via the utilisation of thickness adjusting spacers or through setting of a mold position parameter on the molding machine (if available as an option).

The volume of thermoplastic material excluded from the mold cavity may be controlled by the selection of adjustable and interchangeable overflow wells which surround the mold cavity.

A known volume of thermoplastic resin is then injected into the mold cavity by an injection molding machine until a significant volume of thermoplastic resin material has been introduced (e.g. between approximately 50 and 99%). Preferably approximately 70 to 95% of the total volume of the resin material, more preferably approximately 80% of the total volume of resin material, is introduced into the mold cavity prior to the initiation of the compression stroke. This may reduce or avoid the thermoplastic flow front slowing or stopping, which may in turn generate an unwanted flow line defect.

The injection molding machine may be of any suitable type which will permit control of the applied clamp force.

The molding method according to the present invention may function as a cold runner or hot runner system. A hot runner system is preferred for multiple cavity applications, as described below.

Accordingly in a preferred aspect of the present invention the molding method further includes
maintaining the contact surface(s) mold cavity (cavities) at a preselected elevated temperature during the injection stroke.

The mold cavity contact surface(s) may be maintained at a temperature at or above the glass transition temperature, Tg, of the resin material, e.g. for Polycarbonate resin at approximately 140°C to 170°C, preferably approximately 140°C to 150°C. Heating may be undertaken utilising any suitable means.

The mold cavity may be provided with a heated circulating fluid or electric heating or a combination thereof. Alternatively, or in addition, a radiant or inductive heating system may be used.

The mold cavity may thereafter be cooled to a temperature at or below the solidification temperature of the resin material, e.g. approximately 80°C to 140°C, preferably approximately 100°C to 120°C.

Accordingly, in this aspect of the present invention, the molding method may further include subsequently cooling the mold cavity to a temperature below the glass transition (Tg) temperature of the resin material.

Depending on the nature of the cooling system, as discussed above, the cooling cycle may be initiated relatively rapidly after the heating cycle has completed. In one embodiment where a remote cooling system is used the cooling and heating cycles may overlap to some degree.

The compression stroke pressure, time and velocity utilised in the molding method may be tightly controlled to ensure good filling and packing of the mold cavity. Preferably, an initially relatively fast compression stroke is selected in order to exclude excess material from the cavity and volumetrically fill the overflow wells, and fast enough to prevent substantial freezing of the lens cross-section. A closing velocity in the range of approximately 0.5 to 30 mm/sec may be used, more preferably approximately 5 to 10 mm/sec.

The compression force of the compression stroke is then varied to a selected secondary level in a controlled fashion in order to avoid possible cavitation and thus the development of internal stress marks and defects. For example as discussed above, where the compression force is reduced, the controlled reduction may be a tapered or step-wise reduction in pressure.

The secondary selected compression force is then maintained for a preselected period to hold dimensional tolerances as the whole mold cavity freezes.

Where a minus lens is formed, the compression force may be reduced to a final selected level to avoid lens distortions but the force is sufficient to ensure that the optical inserts remain in contact with the molded lens.

Finally, the molded lenses are ejected from the cavity, supported by the optical inserts, so that stress during ejection is reduced or eliminated.

In a preferred aspect of the present invention, the method may be applied to a multiple mold cavity system. For example the method may include
providing a pair of mold cavities defined by a pair of opposed spaced apart inserts shaped and configured to define opposite faces of a pair of optical lenses, and having a plurality of overflow wells surrounding each mold cavity; the moving parts being linked to a common plate to ensure consistent and co-ordinated movement thereof.

It will be understood that utilising a pair of mold cavities, linked to a common supporting core activation system, permits more precise control of a pair of optical lenses, thereby ensuring that the inserts move in a concerted and controlled manner, reducing any variation in relative position or force of the inserts.

As stated above, where multiple mold cavities are used, a hot runner system is preferred.

The melt processable material utilised in the preparation of the optical lenses according to the present invention may be of any suitable thermoplastic resin type. An acrylic based material or polycarbonate may be used. Other thermoplastics materials which may be used include Cyclo-olefin copolymers (COC), Polyamide, Polyester, Polystyrene or blends of these polymers. A polycarbonate material is preferred.

The optical lens produced in accordance with the present invention may be an ophthalmic lens adapted for mounting in eyewear, the lens element having a spherical surface with a radius of curvature less than about 35 mm, said lens element being adapted for positioning such that a center of curvature of the lens element is located at the centroid of rotation of the eye, wherein the lens element is sufficiently large to provide a field of view greater than 55° in the temporal direction from the forward line of sight and has a through power in the range of at least approximately +4 D to -6 D.

The ophthalmic lens may be of the type described in International patent applications PCT/AU99/00399 and PCT/AU99/00430, to Applicants, the entire disclosures of which are incorporated herein by reference. The ophthalmic lens may take the form of a standard lens or a semi-finished lens blank.

In a further aspect of the present invention there is provided an apparatus for moulding an optical lens from a molten thermoplastic resin material using an injection moulding machine, and including
means for forming a mould cavity defined by a pair of opposed, spaced apart inserts shaped and configured to define opposite faces of said optical lens and having a plurality of overflow wells surrounding the mould cavity;
means for injecting a predetermined optimum volume of resin material into said mould cavity;
means for controllably moving at least one insert relative to the other insert, wherein such relative insert motion is driven by a power cylinder capable of providing a variable compression stroke during moulding and is initiated prior to completion of said injection;
means for applying a supplementary compressive force directed towards the periphery of the lens coincident with, or subsequent to, initiation of said primary compressive force;
means for controlling the velocity and/or compressive force of the compression stroke of said power cylinder such that said compression is conducted at a high velocity, thus urging excess resin from said cavity into said overflow wells after which the compression force is varied to a secondary selected level, the secondary selected compressive force being greater than or less than the primary compressive force;
means for maintaining the secondary selected compressive force on said mould cavity; and
means for ejecting the lens.

It will be understood that the apparatus according to the present invention may be utilised in combination with any standard injection molding machine.

The apparatus according to this aspect of the present invention permits the generation of a variable pressure profile which permits internal stresses, and thus optical defects, to be significantly reduced. Similarly, by initiating the compression stroke just prior to the completion of the injection stroke, the propensity of the injection system to produce an unwanted flow line on the surface of the lens is substantially reduced or eliminated.

Further, the means for applying a supplementary compressive force directed towards the periphery of the lens coincident with or subsequent to, initiation of said primary compressive force permits a secondary coining or lenticular coining step to be conducted. As stated above, this permits greater control of the dimensions of the lens at the periphery thereof, particularly to compensate for shrinkage.

In a preferred embodiment of the present invention, the molding apparatus may include means for controlling both the velocity and compressive force of the compression stroke.

In this embodiment, the velocity of the compression stroke may be controlled independently of compressive force. Thus the high velocity preferred for the initial compression stroke may be achieved with a low applied primary compressive force. The compressive force may subsequently be increased relatively rapidly to the selected secondary level. For example, as discussed above, the molding apparatus according to the present invention may exhibit a compression velocity of approximately 0.5 to 30 mm/sec, more preferably approximately 5 to 10 mm/sec.

In an alternative embodiment, the control means may permit control of the velocity of the compression stroke via control of compressive force. As discussed above, it is necessary to generate a high primary compressive force to provide the high velocity required. The compressive force may subsequently be reduced to the selected secondary level in a controlled manner, preferably in a tapered or step-wise manner.

In a further preferred embodiment the control means may permit reduction of the secondary selected compressive force to a final selected compressive force.

In a still further preferred embodiment of the present invention, the first insert forming the mold cavity may be mounted on a fixed mold plate and the second opposed insert is mounted on a movable mold plate.

The fixed and movable mold plates may be mounted between a pair of platens attached together utilising a tie bar.

In a further preferred embodiment each overflow well of the molding apparatus may include means for controlling the amount of overflow therein. The overflow control means may include a plurality of insertable overflow well ejector pins.

The means for applying a supplementary compressive force may include one or more injectors capable of injecting further thermoplastic resin material into the mold cavity.

Alternatively or in addition such means for applying the supplementary compressive force may includes a means for applying a supplementary clamping or hydraulic force.

As discussed above, the molding apparatus may be run as a hot runner or cold runner system. A hot runner system may be used where multiple mold cavities are included.

In a further embodiment of the present invention, the molding apparatus may further include means for heating the contact surface (s) of the mold cavity.

The means for heating the mold cavity contact surface (s) may include means for circulating heated fluid or an electric heating system or a combination thereof. Alternatively, or in addition, the heating means may include a radiant or induction heating system.

The molding apparatus according to this aspect may further include means for cooling the contact surface (s) of mold cavity.

The cooling means may include means for circulating a cooling fluid or other refrigerant means.

In a further preferred embodiment, the means for forming the mold cavity may further include means for setting the distance between said spaced apart inserts. The distance setting means may include one or more thickness adjusting spacers or may include a programmable means for setting of a mold position parameter on the molding apparatus.

The molding apparatus according to the present invention may further include
means for forming a pair of mold cavities defined by a pair of opposed spaced apart inserts shaped and configured to define opposite faces of a pair of optical lenses, and having a plurality of overflow wells surrounding each mold cavity;
the moving parts being linked to a common plate to ensure consistent and co-ordinated movement thereof.

As stated above the provision of a pair of mold cavities, linked to a common supporting core activation system, permits more precise control of a pair of optical lenses, thereby ensuring that the inserts move in a concerted and controlled manner, reducing any variation in relative position or force of the inserts.

The present invention will now be more fully described with reference to the accompanying drawings and examples. It should be understood, however, that the description following is illustrative only and should not be taken in any way as a restriction on the generality of the invention as described above.

In the figures:
Figure 1 illustrates an optical lens molded utilising the molding method according to the present invention.
Figure 2 illustrates an injection molding and compression system with the mold closed and tension plate pre-loaded.
Figure 3 illustrates the injection molding and compression system according to Figure 2, after the injection stroke has been initiated and the mold cavities part filled.
Figure 4 illustrates the injection molding system and compression system according to Figure 2 after thermoplastic material has been expelled into the overflow wells and maximum compression force supplied.
Figure 5 illustrates the embodiment of the injection molding and compression system according to the present invention. In this embodiment, the system may be characterised as providing lenticular coining with pre-exclusion and gate shutoff.
   The mold is closed and the edge coining system moved forward. The coining system may be activated through direct hydraulic pressure, use of a tapered shoe with a sliding wedge, toggle activated, or other means.
Figure 6 illustrates the embodiment of the injection mold and compression system according to the present invention, again providing lenticular coining with pre-exclusion, this embodiment exhibiting a reversed coining configuration which may be simpler to implement within the same tool as previously described.
Figure 7 is a graph showing variations of centre thickness, clamp position and screw position with time for a molding cycle for the manufacture of a +1.00/1.00 lens according to the present invention.
Figure 8 is a graph showing variations of centre thickness, clamp position and screw position with time for a molding cycle for the manufacture of a -1.50/0.50 lens according to the present invention.

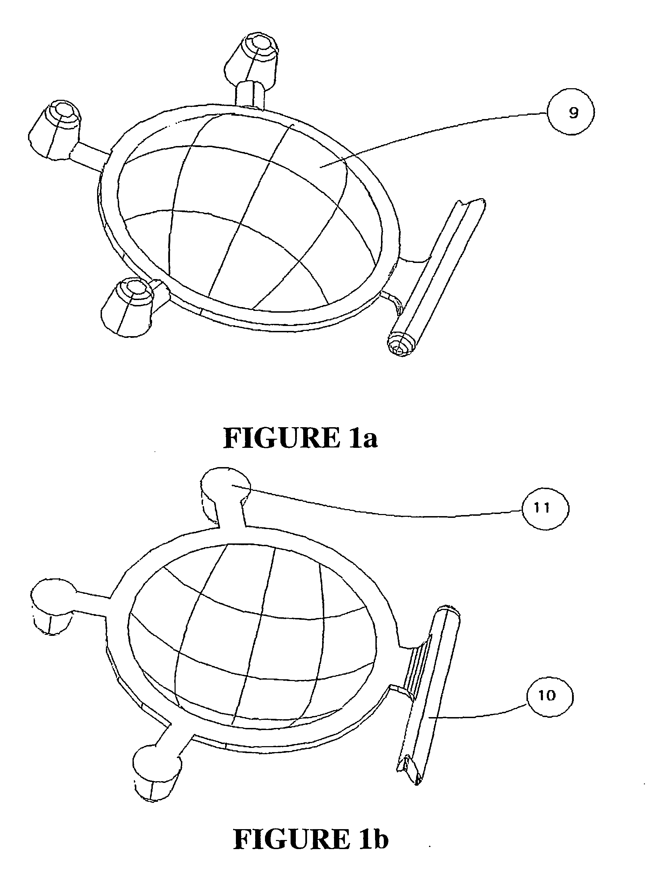

In more detail, Figure 1 illustrates a pair of lenses after ejection from the injection molding system of Figure 1. Figure 1 a shows the view from the front of the lens. Figure 1b shows the same lens when viewed from behind. The lens 9 is attached via a solidified injection runner 10 and each bear overflow well residues 11.

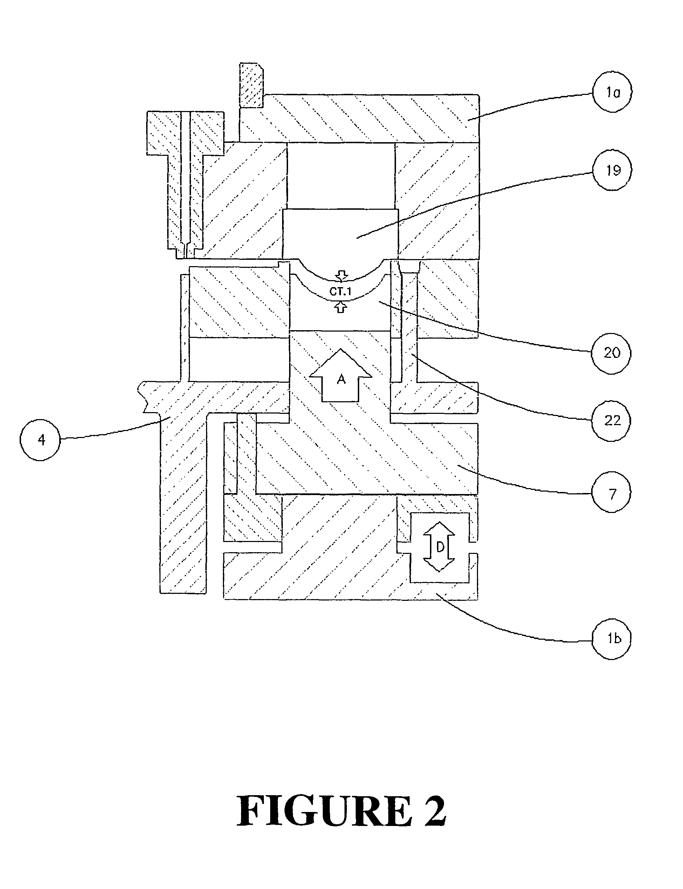

As best illustrated in Figures 2 to 4, the injection molding system is initially open with the ejector plate 4 and coining system 7 returned. Depending on the thickness and curvature of the lenses to be molded, appropriate upper mold inserts and back mold support collars 19 are mounted in position, together with corresponding lower mold inserts and support collars 20. The lower mold section located on platen 1 b is then closed in direction of arrow A such that the initial lens blank thickness CT1 is defined by the adjustable height of lower mold inserts and supports, 20 and upper mold inserts and supports 19 or through setting of an adjustable mold position parameter on the molding machine controller, if available. The amount of overflow in the overflow wells is set via selection of appropriate insertable overflow well ejector pin 22.

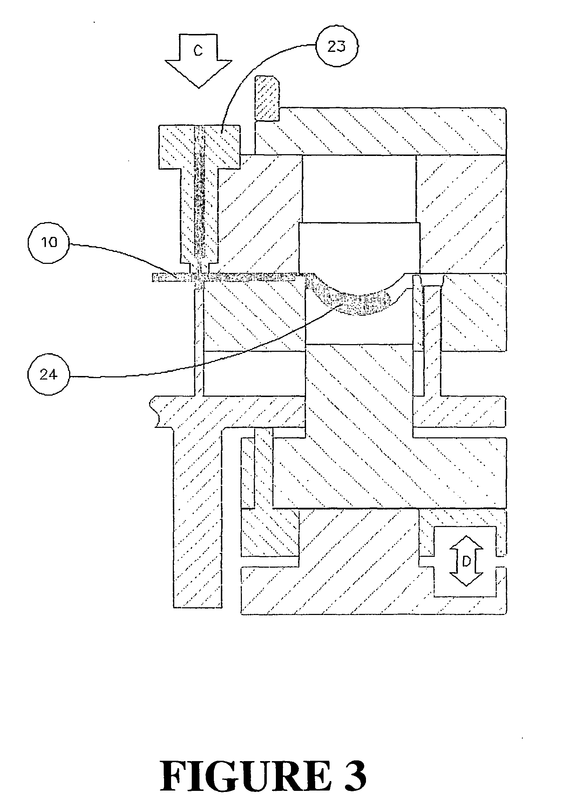

As best illustrated in Figure 3, molten thermoplastic material is then injected from an injection molding machine (not shown) through an injection conduit 23 to define an injection line 10 and ultimately filling the mold cavities 24. The direction of movement of the molten thermoplastic material is shown by arrow C.

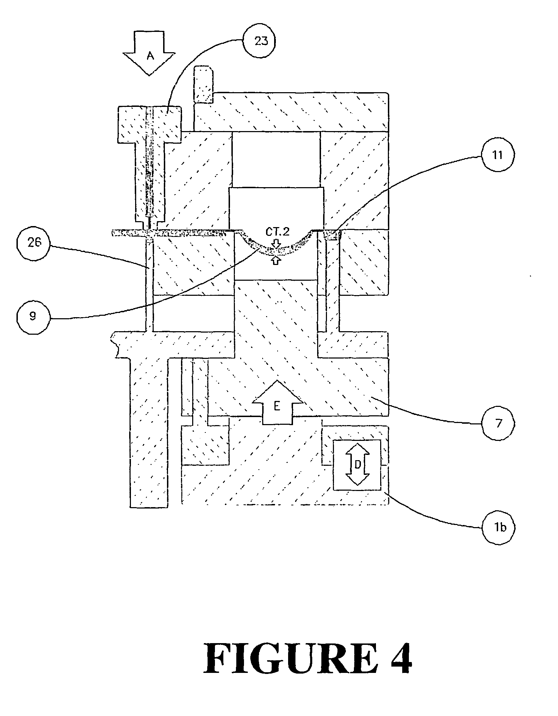

As best illustrated in Figure 4, injection continues until e.g. approximately 80% of the preselected amount of molten thermoplastic material is introduced into the pre-enlarged cavity. The coining system 7 is then activated to squeeze excess material out of the mold cavities and into the overflow wells 11. The direction of movement of the coining system is shown by arrow E against spring D. The compression system exhibits a relatively fast initial compression stroke to a) squeeze excess material out of the cavity, b) prevent substantial freezing of the lens cross-section during compression leading to development of internal stresses and cosmetic defects, and c) compress the molten material to compensate for lens shrinkage on cooling.

The high compression pressure is then applied and maintained until the molten material in the mold cavities begins to freeze off.

The compression pressure is gradually tapered off as the material in the mold cavity freezes to avoid over compressing the solidified lens which in turn may cause stress marks.

The lower compression pressure is maintained to ensure the precise shape of the solidified lens is retained as the lens material cools to ejection temperature. The coining system is then returned. The upper mold section is then opened. The ejector plate is activated which subsequently activates well ejectors 25 and runner ejector 26. The molded lens 9 may then be removed.

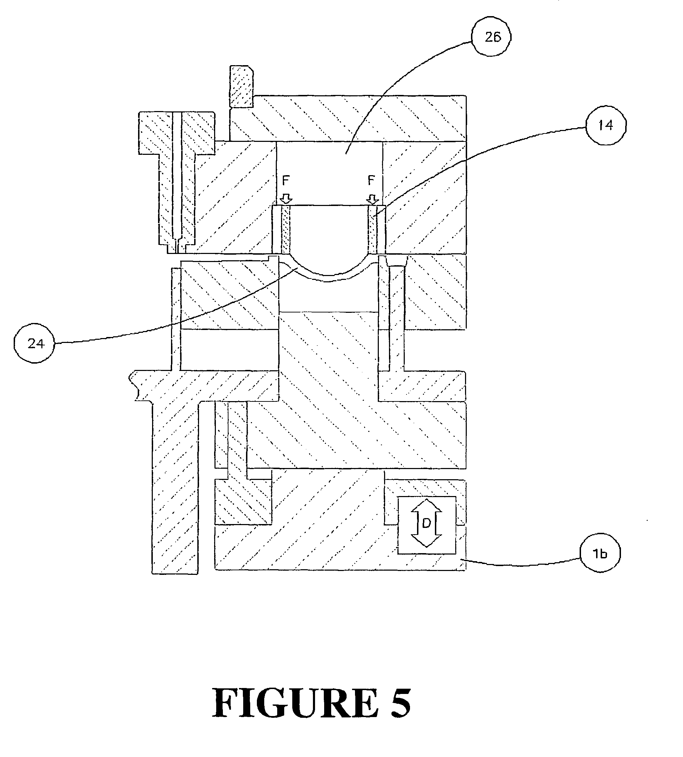

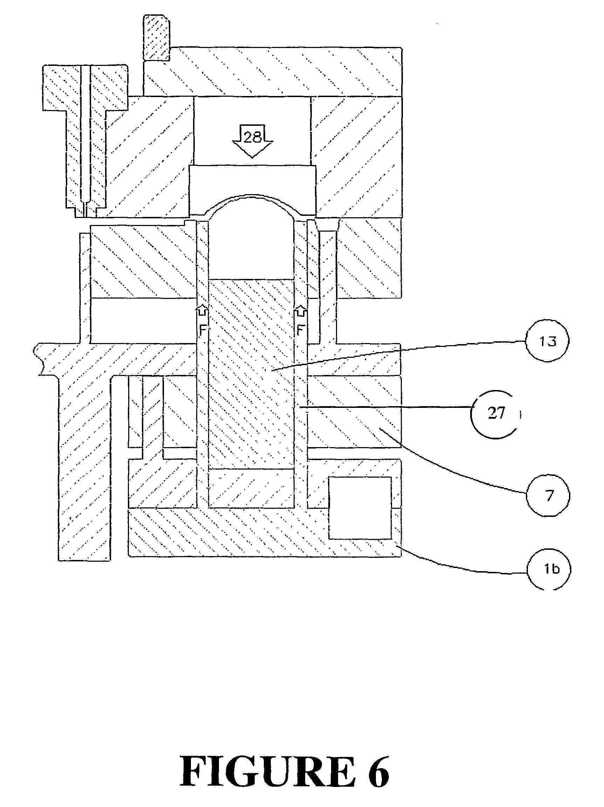

As illustrated in Figures 5 and 6, the molding apparatus according to the present invention includes means for generating a supplementary compressive force to achieve secondary lenticular coining.

In one lenticular coining embodiment illustrated in Figure 5, the mold cavity 24 is initially partially open. Closure of the mold cavity is actuated by coining system 7 to squeeze excess material out of the mold cavity and into the overflow wells. Secondary coining is then actuated by a mechanism shown as 26, which may include horizontal movement of a slide cam, a toggle arrangement, use of a hydraulic fluid or other means.

In the embodiment of Figure 5, arrows F indicate the direction of motion of an annular coining ring 14 which applies an annular compressive force to the thick edge of for example a high minus optical lens 24.

In an alternative embodiment illustrated in Figure 6, the central lenticular coining arrangement is such that the optical inserts are reversed. Actuation of the primary compressive or coining stop is via mechanism 28. Secondary coining is achieved via motion of the coining cylinder 27 in the direction shown by arrows F via motion of platen 1 b.

### EXAMPLES

### EXAMPLE 1

In this example, a Polycarbonate resin (commercial high viscosity ophthalmic grade) is used to form an optical lens. Upper and lower mold inserts 19 and 20 are shaped to form a +1.00/1.00 lens, that is a plus lens having +1.00 D sphere power and 1.00 D cylinder power.

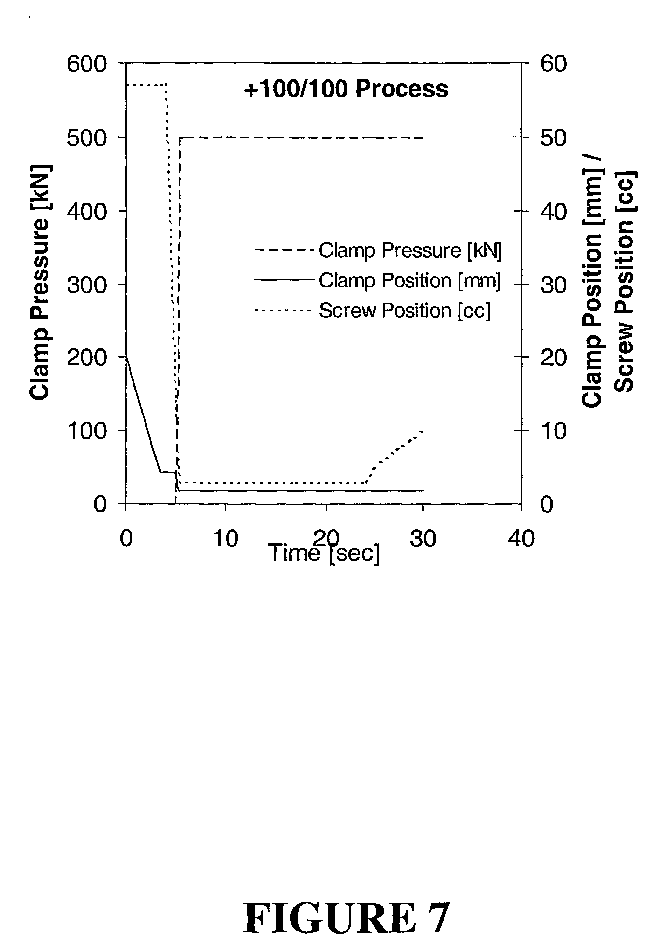

The molding cycle is illustrated with reference to Table 1 and Figure 7.

At the time 0 sec the mold is fully open (>100 mm) and moves to a first position where the optical lens inserts are separated by 4.3 mm. Injection of Polycarbonate resin is then initiated at 4 seconds total elapsed time from an injection molding machine through injection conduit 23. Initially 57cc of polycarbonate resin is in the injection unit.

When injection volume has been injected, approximately 75% of the total, after 5 secs, the compression stroke is initiated (high velocity stage). Centre thickness is then reduced to 2.2 mm in 0.2 seconds.

Clamp force (pressure) is maintained relatively low (approximately 200 kN) during the high velocity stage.

The second, high pressure stage is then initiated after 5.4 seconds total elapsed time, with centre thickness reduced to approximately 1.8 mm, clamp force (pressure) rising to approximately 500 kN.

High clamp force is maintained until the centre of the ophthalmic lens is substantially solidified, e.g. after approximately 120 seconds total elapsed time. The finished lens is then ejected.

**Table 1**

| **Time [sec]** | **Clamp Position** **[mm]** | **Screw Position** **[cc]** | **Clamp Pressure** **[kN]** |
|---|---|---|---|
| 2 | 20 | 57 | 0 |
| 3.5 | 4.3 | 57 | 0 |
| 4 | 4.3 | 57 | 0 |
| 5 | 4.3 | 14 | 0 |
| 5.2 | 2.2 | 5 | 200 |
| 5.4 | 1.8 | 3 | 500 |
| 6 | 1.8 | 3 | 500 |
| 15 | 1.8 | 3 | 500 |
| 17 | 1.8 | 3 | 500 |
| 24 | 1.8 | 3 | 500 |
| 25 | 1.8 | 5 | 500 |
| 30 | 1.8 | 10 | 500 |

### EXAMPLE 2

In this example, the process of molding a lens described in Example 1 is repeated for a -1.50/0.50 lens, that is a minus lens having -1.50 D sphere power and 0.50 D cylinder power.

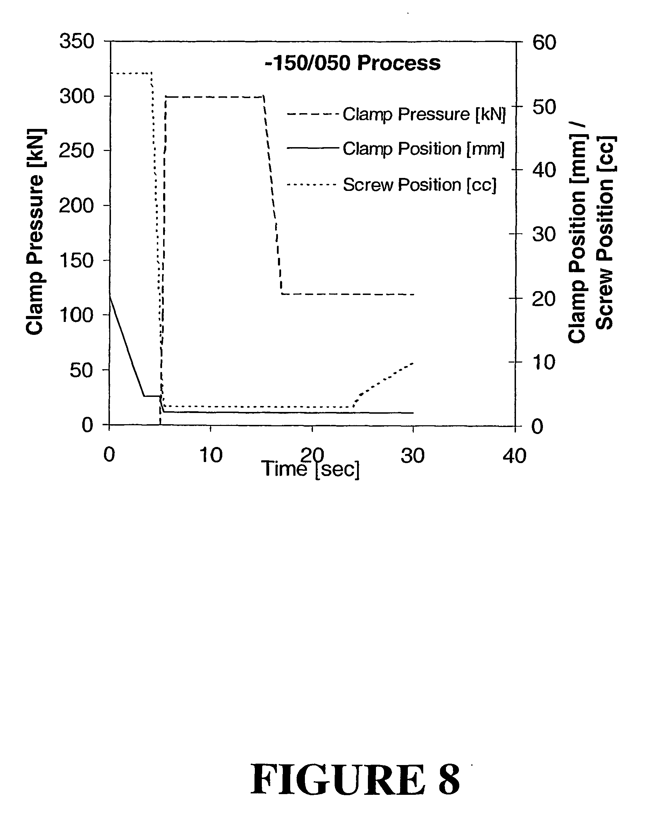

The molding cycle is illustrated with reference to Table 2 and Figure 8.

In this example, at time 0 sec, the mold is fully open (>100 mm) and moves to a first position where the optical lens inserts the separated by 4.5 mm.

Injection of polycarbonate resin is then initiated at 4 seconds total elapsed time from an injection molding machine through injection conduit 23. Initially 55 cc of polycarbonate resin is in the injection unit.

When approximately 75% of the total injection volume has been injected, after 5 seconds, the compression stroke is initiated.

Centre thickness is then reduced to 3 mm in 0.2 secs (high velocity stage). Clamp pressure is kept relatively low at approximately 100 kN during the high velocity stage.

The second, high compressive pressure stage is then initiated after 5.4 seconds total elapsed time, with centre thickness reduced to 1.8 mm. Clamp force (pressure) is increased to 300 kN.

High clamp force is maintained for 15 seconds total elapsed time after which clamp force is reduced to 120 kN and maintained for approximately 120 seconds total elapsed time. The reduced clamp force eliminates the possibility of distortion defects with minus powered lenses, whilst maintaining contact between the optical inserts and the partially frozen molded lens.

The finished lens is then ejected.

**Table 2**

| **Time [sec]** | **Clamp Position** **[mm]** | **Screw Position** **[cc]** | **Clamp Pressure** **[kN]** |
|---|---|---|---|
| 2 | 20 | 55 | 0 |
| 3.5 | 4.5 | 55 | 0 |
| 4 | 4.5 | 55 | 0 |
| 5 | 4.5 | 14 | 0 |
| 5.2 | 3 | 5 | 100 |
| 5.4 | 2 | 3 | 300 |
| 6 | 2 | 3 | 300 |
| 15 | 2 | 3 | 300 |
| 17 | 2 | 3 | 120 |
| 24 | 2 | 3 | 120 |
| 25 | 2 | 5 | 120 |
| 30 | 2 | 10 | 120 |

It will be understood that the invention as defined in the appended claims extends to alternative combinations of the individual features mentioned or evident from the text or drawings.

It will also be understood that the term "comprises" (or its grammatical variants) as used in this specification is equivalent to the term "includes" and should not be taken as excluding the presence of other elements or features.

## Claims

1. A method of moulding an optical lens (9) from a molten thermoplastic resin material using an injection moulding machine which has a power cylinder for providing a variable compression stroke during moulding, said method including the steps of:
providing a mould cavity defined by a pair of opposed, spaced apart inserts (19, 20) shaped and configured to define opposite faces of said optical lens (9) and having a plurality of overflow wells surrounding said mould cavity;
adjusting the distance by which said inserts (19, 20) are spaced from each other;
determining for a particular lens configuration, an optimum volume of resin material to be introduced into the mould cavity, and an optimum processing time;
initiating an injection stroke to introduce said optimum volume of resin material into said mould cavity;
once a significant volume of resin material has been introduced into said cavity but prior to the completion of said injection stroke, beginning a compression stroke of said power cylinder, said compression stroke effecting movement of at least one of said inserts towards the other, said compression stroke being conducted at a high velocity, thus urging said excess resin material from said cavity into said overflow wells;
initiating a supplemental coining or lenticular coining step, the supplemental coining step functioning to apply compressive force to the edge of the optical lens;
varying the primary compressive force generated by said compression stroke to a predetermined secondary level of compressive force selected to provide improved properties to said optical lens, the secondary level compressive force being greater than or less than the primary compressive force;
maintaining the secondary compressive force on said mould cavity and simultaneously cooling the resin material, or allowing the resin material to cool, below its solidification temperature, the time taken from the start of the compression stroke until the resin material has cooled being in accordance with said optimum processing time; and
ejecting the moulded optical lens (9) from the cavity.

2. A method according to claim 1, wherein approximately 70 to 95% of the total volume of the resin material is introduced into the mould cavity prior to the initiation of the compression stroke.

3. A method according to claim 2, wherein the compression velocity is approximately 0.5 to 30 mm/sec.

4. A method according to claim 3, wherein the compression velocity is approximately 5 to 10 mm/sec.

5. A method according to claim 4, wherein the compressive stroke generates a high primary compressive force to provide the required high velocity, the compressive force being subsequently reduced at a controlled rate of reduction to the selected secondary level compressive force.

6. A method according to claim 4, wherein when the velocity of the compression stroke is directly controlled, the primary compressive force is maintained at a low level; the compressive force being subsequently increased to the selected secondary level compressive force.

7. A method according to claim 1, wherein the supplemental coining step includes initiating a supplementary compressive force directed towards the periphery of the lens coincident with, or subsequent to, initiation of said primary compressive force.

8. A method according to claim 7, wherein the supplementary compressive force is applied utilising one or more injectors, which inject further thermoplastic resin material from the injection moulding machine into the mould cavity.

9. A method according to claim 7, wherein the supplementary compressive force is applied utilising a supplementary clamping or hydraulic force.

10. A method according to claim 1, wherein the method further includes maintaining the contact surface of the mould cavity at a preselected elevated temperature during the injection stroke.

11. A method according to claim 10 wherein the mould cavity contact surface is maintained at or above the glass transition temperature Tg of the resin material.

12. A method according to claim 10, which method further includes cooling the contact surface of the moulding cavity to a temperature below the solidification temperature of the resin material.

13. A method according to claim 1, wherein the method further includes, when the optical lens is a minus powered lens, once a substantial portion of the centre thickness of the lens has frozen, reducing the secondary compressive force to a predetermined final level sufficient to maintain contact between the optical inserts and the moulded optical lens.

14. A method according to claim 13, wherein, for a minus powered optical lens, the secondary compressive force is approximately 250 to 400 kN and the final compressive force is reduced to approximately 100 to 200 kN.

15. A method according to claim 1, wherein the opposed spaced apart inserts are shaped and configured to define opposite faces of an optical lens having a high base curve and of thin wall thickness.

16. A method according to claim 15, wherein the lens has a base curve of approximately 9.00 D or above, and a thickness of approximately 1.0 mm to approximately 2.0 mm at the centre of a minus powered lens or at the edge of a plus powered lens.

17. A method according to claim 1, wherein the distance between said spaced apart inserts defines the initial cavity centre thickness which is predetermined to give optimum moulding conditions.

18. A method according to claim 17, wherein the distance between said spaced apart inserts is set utilising one or more thickness adjusting spacers.

19. A method according to claim 18, wherein the distance between said spaced apart inserts is set utilising a setting for a mould position parameter on the injection moulding machine.

20. A method according to claim 1, wherein the method further includes providing a pair of mould cavities defined by a pair of opposed spaced apart inserts shaped and configured to define opposite faces of a pair of optical lenses, and having a plurality of overflow wells surrounding each mould cavity;
the moving parts being linked to a common plate to ensure consistent and coordinated movement thereof.

21. An apparatus for moulding an optical lens from a molten thermoplastic resin material using an injection moulding machine, and including
means for forming a mould cavity defined by a pair of opposed, spaced apart inserts (19, 20) shaped and configured to define opposite faces of said optical lens and having a plurality of overflow wells surrounding the mould cavity;
means for injecting a predetermined optimum volume of resin material into said mould cavity;
means (7) for controllably moving at least one insert relative to the other insert, wherein such relative insert motion is driven by a power cylinder capable of providing a variable compression stroke during moulding and is initiated prior to completion of said injection;
means for controlling the velocity and/or compressive force of the compression stroke of said power cylinder such that said compression is conducted at a high velocity, thus urging excess resin from said cavity into said overflow wells after which the compression force is varied to a secondary selected level, the secondary selected compressive force being greater than or less than the primary compressive force;
means for maintaining the secondary selected compressive force on said mould cavity; and
means for ejecting the lens, **characterized in that** the apparatus further includes means (26, 27, 28) for applying a supplementary compressive force directed towards the periphery of the lens coincident with, or subsequent to, initiation of said primary compressive force.

22. An apparatus according to claim 21, wherein the control means for controlling the velocity and/or compressive force of the compression stroke permits control of both the velocity and compressive force of the compression stroke.

23. An apparatus according to claim 22, wherein the control means permits reduction of the secondary selected compressive force to a final selected compressive force.

24. An apparatus according to claim 21, wherein each overflow well includes means (22) for controlling the amount of overflow therein.

25. An apparatus according to claim 24, wherein the overflow control means includes a plurality of insertable overflow well ejector pins (22).

26. An apparatus according to claim 21, wherein the first insert is mounted on a fixed mould plate and the second opposed insert is mounted on a movable mould plate.

27. An apparatus according to claim 21, wherein the means for applying the supplementary compressive force includes one or more injectors capable of injecting further thermoplastic resin material into the mould cavity.

28. An apparatus according to claim 21, wherein the means for applying the supplementary compressive force includes a means (14) for applying a supplementary clamping or hydraulic force.

29. An apparatus according to claim 28, wherein the means for applying a supplementary clamping or hydraulic force includes a secondary or lenticular coining arrangement.

30. An apparatus according to claim 29, wherein the secondary lenticular coining arrangement includes an actuating means selected from a slide cam, hydraulic fluid or toggle arrangement.

31. An apparatus according to claim 21, wherein the means for forming the mould cavity further includes means for setting the distance between said spaced apart inserts.

32. An apparatus according to claim 31, wherein the distance setting means includes one or more thickness adjusting spacers.

33. An apparatus according to claim 21 wherein the apparatus further includes means for heating the contact surface of the mould cavity.

34. An apparatus according to claim 33 wherein the heating means includes means for circulating heated fluid, or an electric heating system, or a combination thereof.

35. An apparatus according to claim 21, wherein the apparatus further includes means for cooling the contact surface of the mould cavity.

36. An apparatus according to claim 35, wherein the cooling means includes means for circulating a cooling fluid or other refrigerant means.

37. An apparatus according to claim 21, wherein the apparatus further includes means for forming a pair of mould cavities defined by a pair of opposed spaced apart inserts shaped and configured to define opposite faces of a pair of optical lenses, and having a plurality of overflow wells surrounding each mould cavity; the moving parts being linked to a common plate to ensure consistent and coordinated movement thereof.

## Patentansprüche

1. Verfahren zum Gießen bzw. Formen einer optischen Linse (9) aus einem geschmolzenen thermoplastischen Harzmaterial unter Verwendung einer Spritzgussmaschine bzw. -vorrichtung, welche einen Leistungszylinder bzw. Kolben zur Bereitstellung eines variablen Kompressionshubs bzw. Komprimierungsschlags während des Formens aufweist, wobei das Verfahren die Schritte beinhaltet:
Bereitstellen eines durch ein Paar gegenüberliegender, voneinander beabstandeter Einsätze (19, 20) definierten Gusshohlraums, geformt und eingerichtet, gegenüberliegende Flächen bzw. Seiten der optischen Linse (9) zu definieren, und mit einer Anzahl von Überlaufgefäßen bzw. -bohrungen, die den Gusshohlraum umgeben;
Einstellen einer Distanz, um die die Einsätze (19, 20) von einander beabstandet sind;
Bestimmen eines optimalen in den Gusshohlraum einzuführenden Harzmaterialvolumens und einer optimalen Verarbeitungszeit für eine bestimmte Linsenkonfiguration;
Einleiten eines Injektionshubs zum Einführen des optimalen Harzmaterialvolumens in den Gusshohlraum;
sobald ein signifikantes Harzmaterialvolumen in den Hohlraum eingeführt wurde, aber vor der Vervollständigung des Injektionshubs, Beginnen mit einem bzw. Einleiten eines Kompressionshubs des Kolbens, wobei der Kompressionshub eine Bewegung wenigstens eines der Einsätze in Richtung des anderen bewirkt, wobei der Kompressionshub mit einer hohen Geschwindigkeit ausgeführt wird, wodurch überschüssiges Harzmaterial aus dem Gusshohlraum in die Überlaufbohrungen gedrückt bzw. gedrängt wird;
Einleiten eines zusätzlichen Präge- oder eines linsenförmigen bzw. Linsen-Prägeschritts, wobei der zusätzliche Prägeschritt dahingehend wirkt, dass er eine komprimierende Kraft auf die Kante der optischen Linse ausübt;
Variieren der durch den Kompressionshub erzeugten primären bzw. ersten komprimierenden Kraft auf ein vorbestimmtes sekundäres bzw. zweites Niveau einer komprimierenden Kraft, das ausgewählt ist, um verbesserte Eigenschaften für bzw. an die optische Linse bereitzustellen, wobei die komprimierende Kraft des zweiten Niveaus größer oder geringer als die erste komprimierende Kraft ist;
Halten der zweiten komprimierenden Kraft auf den Gusshohlraum und gleichzeitig Abkühlen des Harzmaterials oder Abkühlenlassen des Harzmaterials unter seine Verfestigungstemperatur, wobei die Zeit vom Einleiten des Kompressionshubs bis zur erfolgten Abkühlung des Harzmaterials der optimalen Verarbeitungszeit entspricht; und
Auswerfen der geformten optischen Linse (9) aus dem Hohlraum.

2. Verfahren nach Anspruch 1, wobei etwa 70 bis 95% des Gesamtvolumens des Harzmaterials vor dem Einleiten des Kompressionshubs in den Gusshohlraum eingeführt werden.

3. Verfahren nach Anspruch 2, wobei die Komprimierungsgeschwindigkeit etwa 0,5 bis 30 mm/s beträgt.

4. Verfahren nach Anspruch 3, wobei die Komprimierungsgeschwindigkeit etwa 5 bis 10 mm/s beträgt.

5. Verfahren nach Anspruch 4, wobei der Kompressionshub eine hohe erste komprimierende Kraft erzeugt, um die erforderliche hohe Geschwindigkeit bereitzustellen, wobei die komprimierende Kraft anschließend mit einer kontinuierlichen bzw. gesteuerten Reduktionsrate auf die komprimierende Kraft des ausgewählten zweiten Niveaus reduziert wird.

6. Verfahren nach Anspruch 4, wobei, wenn die Geschwindigkeit des Kompressionshubs direkt gesteuert wird, die erste komprimierende Kraft auf einem niedrigen Niveau gehalten wird; wobei die komprimierende Kraft nachfolgend auf die komprimierende Kraft des ausgewählten zweiten Niveaus erhöht wird.

7. Verfahren nach Anspruch 1, wobei der zusätzliche Prägeschritt ein zu der Einleitung der ersten komprimierenden Kraft zeitgleiches oder nachfolgendes Einleiten einer zusätzlichen komprimierenden Kraft beinhaltet, die in Richtung der Peripherie der Linse gerichtet ist.

8. Verfahren nach Anspruch 7, wobei die zusätzliche komprimierende Kraft unter Einsatz eines oder mehrerer Injektoren aufgewandt wird, welche weiteres thermoplastisches Harzmaterial aus der Spritzgussmaschine in den Gusshohlraum injizieren.

9. Verfahren nach Anspruch 7, wobei die zusätzliche komprimierende Kraft unter Verwendung einer zusätzlichen Klammer- oder Hydraulikkraft angelegt wird.

10. Verfahren nach Anspruch 1, wobei das Verfahren ferner das Halten der Kontaktoberfläche des Gusshohlraums auf einer vorausgewählten erhöhten Temperatur während des Injektionshubs beinhaltet.

11. Verfahren nach Anspruch 10, wobei die Gusshohlraumkontaktoberfläche bei oder oberhalb der Glasübergangstemperatur Tg des Harzmaterials gehalten wird.

12. Verfahren nach Anspruch 10, welches ferner das Abkühlen der Kontaktoberfläche des Gusshohlraums auf eine Temperatur unterhalb der Verfestigungstemperatur des Harzmaterials beinhaltet.

13. Verfahren nach Anspruch 1, wobei das Verfahren, wenn die optische Linse eine Minuslinse bzw. Linse negativer Brechkraft ist, ferner beinhaltet, die zweite komprimierende Kraft auf ein vorbestimmtes Endniveau zu reduzieren, das ausreichend ist, einen Kontakt zwischen den optischen Einsätzen und der geformten optischen Linse zu halten, sobald ein wesentlicher Teil der Mittendicke der Linse erstarrt ist.

14. Verfahren nach Anspruch 13, wobei für eine Minuslinse die zweite komprimierende Kraft etwa 250 bis 400 kN beträgt und die endgültige komprimierende Kraft auf etwa 100 bis 200 kN reduziert wird.

15. Verfahren nach Anspruch 1, wobei die gegenüberliegenden beabstandeten Einsätze geformt und eingerichtet sind, gegenüberliegende Flächen bzw. Seiten einer optischen Linse mit einer hohen Basis- bzw. Grundkurve und mit geringer Wanddicke zu definieren.

16. Verfahren nach Anspruch 15, wobei die Linse eine Basiskurve von etwa 9,00 D oder darüber und eine Dicke von etwa 1,0 mm bis etwa 2,0 mm in der Mitte einer Minuslinse oder an der Kante bzw. am Rand einer Pluslinse bzw. Linse positiver Brechkraft aufweist.

17. Verfahren nach Anspruch 1, wobei der Abstand zwischen den voneinander beabstandeten Einsätzen die anfängliche Hohlraummittendicke definiert, welche vorbestimmt wird, um optimale Gussbedingungen zu ergeben.

18. Verfahren nach Anspruch 17, wobei der Abstand zwischen den voneinander beabstandeten Einsätzen eingestellt wird, indem ein oder mehrere Dickeneinstellungsabstandshalter verwendet werden.

19. Verfahren nach Anspruch 18, wobei der Abstand zwischen den voneinander beabstandeten Einsätzen unter Verwendung einer Einstellung für einen Gusspositionsparameter auf der Spritzgussmaschine eingestellt wird.

20. Verfahren nach Anspruch 1, wobei das Verfahren ferner das Bereitstellen eines Paars Gusshohlräume beinhaltet, die durch ein Paar gegenüberliegender voneinander beabstandeter Einsätze definiert werden, geformt und eingerichtet, gegenüberliegende Seiten bzw. Flächen eines Paars optischer Linsen zu definieren, und mit einer Anzahl Überlaufbohrungen, die jeden Gusshohlraum umgeben;
wobei die beweglichen Teile mit einer gemeinsamen Platte bzw. Plattform verbunden sind, um eine konsistente und koordinierte Bewegung hiervon zu gewährleisten.

21. Vorrichtung zum Guss einer optischen Linse aus einem geschmolzenen thermoplastischen Harzmaterial unter Verwendung einer Spritzgussmaschine und beinhaltend
Mittel zur Ausbildung eines durch ein Paar gegenüberliegender, voneinander beabstandeter Einsätze (19, 20) definierten Gusshohlraums, geformt und eingerichtet , gegenüberliegende Seiten bzw. Flächen der optischen Linse zu definieren, und mit einer Anzahl Überlaufgefäße bzw. - bohrungen, die den Gusshohlraum umgeben;
Mittel zum Einspritzen bzw. Injizieren eines vorbestimmten optimalen Harzmaterialvolumens in den Gusshohlraum;
Mittel (7) zum gesteuerten bzw. kontrollierten Bewegen wenigstens eines Einsatzes in Bezug auf den anderen Einsatz, wobei eine derartige relative Einsatzbewegung durch einen Leistungszylinder bzw. Kolben, der dazu befähigt ist, einen variablen Kompressionshub bzw. Komprimierungsschlag während des Gusses bereitzustellen, getrieben, und vor der Fertigstellung des Einspritzens eingeleitet wird;
Mittel zum Steuern der Geschwindigkeit und/oder der komprimierenden Kraft des Kompressionshubs des Kolbens, so dass die Komprimierung mit einer hohen Geschwindigkeit ausgeführt wird, wodurch überschüssiges Harz von bzw. aus dem Hohlraum in die Überlaufbohrungen gedrückt bzw. gedrängt wird, wonach die komprimierende Kraft auf ein zweites ausgewähltes Niveau variiert wird, wobei die zweite ausgewählte komprimierende Kraft größer oder kleiner als die erste komprimierende Kraft ist;
Mittel zum Halten der zweiten ausgewählten komprimierenden Kraft auf den Gusshohlraum; und
Mittel zum Auswerfen der Linse, **dadurch gekennzeichnet, dass** die Vorrichtung ferner Mittel (26, 27, 28) zum Anlegen einer zusätzlichen komprimierenden Kraft zeitgleich oder nachfolgend zu der Einleitung der primären komprimierenden Kraft aufweist, die in Richtung der Peripherie der Linse gerichtet ist.

22. Vorrichtung nach Anspruch 21, wobei die Steuermittel zum Steuern der Geschwindigkeit und/oder der komprimierenden Kraft des Kompressionshubs eine Steuerung sowohl der Geschwindigkeit als auch der komprimierenden Kraft des Kompressionshubs erlauben.

23. Vorrichtung nach Anspruch 22, wobei die Steuermittel eine Reduktion der zweiten ausgewählten komprimierenden Kraft auf eine endgültige ausgewählte komprimierende Kraft beinhalten.

24. Vorrichtung nach Anspruch 21, wobei jede Überlaufbohrung Mittel (22) zum Steuern der Menge bzw. des Umfangs des Überlaufs darin beinhalten.

25. Vorrichtung nach Anspruch 24, wobei die Überlaufsteuermittel eine Anzahl einsetzbarer Überlaufbohrungsauswerfzapfen (22) beinhalten.

26. Vorrichtung nach Anspruch 21, wobei der erste Einsatz auf einer befestigten Gussplatte bzw. -plattform angebracht ist und der zweite gegenüberliegende Einsatz auf einer beweglichen Gussplatte angebracht ist.

27. Vorrichtung nach Anspruch 21, wobei die Mittel zum Anlegen der zusätzlichen komprimierenden Kraft einen oder mehrere Injektoren beinhalten, dazu befähigt, weiteres thermoplastisches Harzmaterial in den Gusshohlraum zu injizieren.

28. Vorrichtung nach Anspruch 21, wobei die Mittel zum Anlegen der zusätzlichen komprimierenden Kraft Mittel (14) zum Anlegen einer zusätzlichen Klammer- oder Hydraulikkraft beinhalten.

29. Vorrichtung nach Anspruch 28, wobei die Mittel zum Anlegen einer zusätzlichen Klammer- oder Hydraulikkraft eine zweite oder Linsenprägeanordnung beinhalten.

30. Vorrichtung nach Anspruch 29, wobei die zweite Linsenprägeanordnung Aktormittel aufweist, die aus einem Gleitschaft, aus Hydraulikflüssigkeit oder einer Kippanordnung ausgewählt sind.

31. Vorrichtung nach Anspruch 21, wobei die Mittel zur Ausbildung des Gusshohlraums ferner Mittel zum Einstellen des Abstands zwischen den voneinander beabstandeten Einsätzen beinhalten.

32. Vorrichtung nach Anspruch 31, wobei die Distanzeinstellungsmittel einen oder mehrere Dickeneinstellungsabstandshalter beinhalten.

33. Vorrichtung nach Anspruch 21, wobei die Vorrichtung ferner Mittel zum Erwärmen der Kontaktfläche des Gusshohlraums beinhalten.

34. Vorrichtung nach Anspruch 33, wobei die Erwärmungsmittel Mittel zum Zirkulieren erwärmten Fluids oder ein elektrisches Heizsystem oder eine Kombination hiervon beinhalten.

35. Vorrichtung nach Anspruch 21, wobei die Vorrichtung ferner Mittel zum Abkühlen der Kontaktoberfläche des Gusshohlraums beinhaltet.

36. Vorrichtung nach Anspruch 35, wobei die Kühlmittel Mittel zum Zirkulieren eines Kühlfluids oder anderer bzw. andere Kühlmittel beinhalten.

37. Vorrichtung nach Anspruch 21, wobei die Vorrichtung ferner Mittel zum Ausbilden eines Paars von Gusshohlräumen beinhaltet, die durch ein Paar gegenüberliegender, voneinander beabstandeter Einsätze definiert sind, geformt und eingerichtet, gegenüberliegende Flächen bzw. Seiten eines Paars optischer Linsen zu definieren, und mit einer Anzahl von Überlaufbohrungen, die jeden Gusshohlraum umgeben; wobei die beweglichen Teile mit einer gemeinsamen Platte bzw. Plattform verbunden sind, um eine konsistente und koordinierte Bewegung hiervon zu gewährleisten.

## Revendications

1. Procédé de moulage d'une lentille optique (9) à partir d'un matériau en résine thermoplastique fondue en utilisant une machine à mouler par injection qui comprend un vérin de commande pour fournir une course de compression variable pendant le moulage, ledit procédé incluant les étapes consistant à :
fournir une matrice de moule définie par une paire d'insertions opposées (19, 20), espacées l'une de l'autre, mises en forme et configurées pour définir les faces opposées de ladite lentille optique (9) et ayant une pluralité de talons de lavage entourant ladite matrice de moule ;
régler la distance séparant lesdites insertions (19, 20) l'une de l'autre ;
déterminer, pour une configuration de lentille particulière, un volume optimal de matériau en résine à introduire dans la matrice de moule et une durée de traitement optimale ;
déclencher une course d'injection pour introduire ledit volume optimal de matériau en résine dans ladite matrice de moule ;
après qu'un volume significatif de matériau en résine a été introduit dans ladite matrice, mais avant la fin de ladite course d'injection, commencer une course de compression dudit vérin de commande, ladite course de compression effectuant un déplacement d'au moins l'une desdites insertions vers l'autre, ladite course de compression étant effectuée à une vitesse élevée, de manière à pousser ledit matériau en résine en excédent de ladite matrice dans lesdits talons de lavage ;
déclencher une étape de frappe lenticulaire ou de frappe supplémentaire, l'étape de frappe supplémentaire servant à appliquer une force de compression au bord de la lentille optique ;
faire varier la force de compression primaire générée par ladite course de compression à un niveau secondaire prédéterminé de force de compression sélectionnée pour fournir des propriétés améliorées à ladite lentille optique, la force de compression de niveau secondaire étant supérieure ou inférieure à la force de compression primaire ;
maintenir la force de compression secondaire sur ladite matrice de moule et refroidir simultanément le matériau en résine, ou permettre le refroidissement du matériau en résine au-dessous de sa température de solidification, la durée écoulée depuis le début de la course de compression jusqu'au refroidissement du matériau en résine étant conforme à ladite durée de traitement optimale ; et
éjecter la lentille optique moulée (9) de la matrice.

2. Procédé selon la revendication 1, dans lequel approximativement 70 à 95 % du volume total du matériau en résine est introduit dans la matrice de moule avant le déclenchement de la course de compression.

3. Procédé selon la revendication 2, dans lequel la vitesse de compression est approximativement de 0,5 à 30 mm/seconde.

4. Procédé selon la revendication 3, dans lequel la vitesse de compression est approximativement de 5 à 10 mm/seconde.

5. Procédé selon la revendication 4, dans lequel la course de compression génère une force de compression primaire élevée pour fournir la vitesse élevée requise, la force de compression étant par la suite réduite, selon un taux de réduction commandé, à la force de compression de niveau secondaire sélectionnée.

6. Procédé selon la revendication 4, dans lequel lorsque la vitesse de la course de compression est directement commandée, la force de compression primaire est maintenue à un niveau faible, la force de compression étant par la suite portée à la force de compression de niveau secondaire sélectionnée.

7. Procédé selon la revendication 1, dans lequel l'étape de frappe supplémentaire inclut de déclencher une force de compression supplémentaire dirigée vers la périphérie de la lentille de manière concordante avec le déclenchement de ladite force de compression primaire ou à la suite de celui-ci.

8. Procédé selon la revendication 7, dans lequel la force de compression supplémentaire est appliquée en utilisant un ou plusieurs injecteurs, lesquels injectent davantage de matériau en résine thermoplastique depuis la machine à mouler par injection dans la matrice de moule.

9. Procédé selon la revendication 7, dans lequel la force de compression supplémentaire est appliquée en utilisant une force hydraulique ou de serrage supplémentaire.

10. Procédé selon la revendication 1, dans lequel le procédé inclut en outre de maintenir la surface de contact de la matrice de moule à une température élevée présélectionnée pendant la course d'injection.

11. Procédé selon la revendication 10, dans lequel la surface de contact de matrice de moule est maintenue à une température de transition vitreuse Tg du matériau en résine, ou au-dessus de celle-ci.

12. Procédé selon la revendication 10, lequel procédé inclut en outre de refroidir la surface de contact de la matrice de moule à une température située au-dessous de la température de solidification du matériau en résine.

13. Procédé selon la revendication 1, dans lequel le procédé inclut en outre, lorsque la lentille optique est une lentille négative, après qu'une partie substantielle de l'épaisseur centrale de la lentille a solidifié, de réduire la force de compression secondaire à un niveau final prédéterminé suffisant pour maintenir le contact entre les insertions optiques et la lentille optique moulée.

14. Procédé selon la revendication 13, dans lequel, pour une lentille optique négative, la force de compression secondaire est approximativement de 250 à 400 kN et la force de compression finale est réduite à approximativement 100 à 200 kN.

15. Procédé selon la revendication 1, dans lequel les insertions opposées, espacées l'une de l'autre, sont mises en forme et configurées pour définir les faces opposées d'une lentille optique ayant une courbure de base élevée et une mince épaisseur de paroi.

16. Procédé selon la revendication 15, dans lequel la lentille a une courbure de base d'approximativement 9,00 D, ou supérieure, et une épaisseur d'approximativement 1,0 mm à approximativement 2,0 mm au niveau du centre d'une lentille négative ou au niveau du bord d'une lentille positive.

17. Procédé selon la revendication 1, dans lequel la distance entre lesdites insertions espacées l'une de l'autre définit l'épaisseur de centre de matrice initiale qui est prédéterminée pour fournir des conditions de moulage optimales.

18. Procédé selon la revendication 17, dans lequel la distance entre lesdites insertions espacées l'une de l'autre est définie en utilisant une ou plusieurs butées d'espacement de réglage d'épaisseur.

19. Procédé selon la revendication 18, dans lequel la distance entre lesdites insertions espacées l'une de l'autre est définie en utilisant un réglage pour un paramètre de position de moule sur la machine à mouler par injection.

20. Procédé selon la revendication 1, dans lequel le procédé inclut en outre de fournir une paire de matrices de moule définie par une paire d'insertions opposées, espacées l'une de l'autre, mises en forme et configurées pour définir des faces opposées d'une paire de lentilles optiques, et ayant une pluralité de talons de lavage entourant chaque matrice de moule ;
les pièces mobiles étant associées à une plaque commune pour garantir un déplacement cohérent et coordonné de celles-ci.

21. Dispositif pour mouler une lentille optique à partir d'un matériau en résine thermoplastique fondue en utilisant une machine à mouler par injection, et comprenant :
des moyens pour former une matrice de moule définie par une paire d'insertions opposées (19, 20), espacées l'une de l'autre, mises en forme et configurées pour définir les faces opposées de ladite lentille optique et ayant une pluralité de talons de lavage entourant la matrice de moule ;
des moyens pour injecter un volume optimal prédéterminé de matériau en résine dans ladite matrice de moule ;
des moyens (7) pour déplacer de manière commandée au moins une insertion par rapport à l'autre insertion, dans lequel un tel déplacement relatif d'insertions est entraîné par un vérin de commande pouvant fournir une course de compression variable pendant le moulage et est déclenché avant la fin de ladite injection ;
des moyens pour commander la vitesse et/ou la force de compression de la course de compression dudit vérin de commande de sorte que ladite compression est effectuée à une vitesse élevée, poussant de ce fait la résine en excédent de ladite matrice dans lesdits talons de lavage après que la force de compression a varié à un niveau sélectionné secondaire, la force de compression sélectionnée secondaire étant supérieure ou inférieure à la force de compression primaire ;
des moyens pour maintenir la force de compression sélectionnée secondaire sur ladite matrice de moule ; et
des moyens pour éjecter la lentille, **caractérisé en ce que** le dispositif comprend en outre des moyens (26, 27, 28) pour appliquer une force de compression supplémentaire dirigée vers la périphérie de la lentille de manière concordante avec le déclenchement de ladite force de compression primaire ou à la suite de celui-ci.

22. Dispositif selon la revendication 21, dans lequel les moyens de commande pour commander la vitesse et/ou la force de compression de la course de compression permettent de commander à la fois la vitesse et la force de compression de la course de compression.

23. Dispositif selon la revendication 22, dans lequel les moyens de commande permettent la réduction de la force de compression sélectionnée secondaire à une force de compression sélectionnée finale.

24. Dispositif selon la revendication 21, dans lequel chaque talon de lavage comprend des moyens (22) pour commander la quantité de trop-plein dans ceux-ci.

25. Dispositif selon la revendication 24, dans lequel les moyens de commande de trop-plein comprennent une pluralité d'éjecteurs (22) de talon de lavage insérables.

26. Dispositif selon la revendication 21, dans lequel la première insertion est montée sur une plaque de moulage fixe et la seconde insertion opposée est montée sur une plaque de moulage mobile.

27. Dispositif selon la revendication 21, dans lequel les moyens pour appliquer la force de compression supplémentaire comprennent un ou plusieurs injecteurs pouvant injecter davantage de matériau en résine thermoplastique dans la matrice de moule.

28. Dispositif selon la revendication 21, dans lequel les moyens pour appliquer la force de compression supplémentaire comprennent des moyens (14) pour appliquer une force hydraulique ou de serrage supplémentaire.

29. Dispositif selon la revendication 28, dans lequel les moyens pour appliquer une force hydraulique ou de serrage supplémentaire comprennent un agencement de frappe lenticulaire ou secondaire.

30. Dispositif selon la revendication 29, dans lequel l'agencement de frappe lenticulaire ou secondaire comprend des moyens d'actionnement sélectionnés parmi une came coulissante, un agencement d'articulation ou de fluide hydraulique.

31. Dispositif selon la revendication 21, dans lequel les moyens pour former la matrice de moule comprennent en outre des moyens pour définir la distance entre lesdites insertions espacées l'une de l'autre.

32. Dispositif selon la revendication 31, dans lequel les moyens de définition de distance comprennent une ou plusieurs butées d'espacement de réglage d'épaisseur.

33. Dispositif selon la revendication 21, dans lequel le dispositif comprend en outre des moyens pour chauffer la surface de contact de la matrice de moule.

34. Dispositif selon la revendication 33, dans lequel les moyens de chauffage comprennent des moyens pour faire circuler un fluide chauffant, ou un système de chauffage électrique, ou une combinaison de ceux-ci.

35. Dispositif selon la revendication 21, dans lequel le dispositif comprend en outre des moyens pour refroidir la surface de contact de la matrice de moule.

36. Dispositif selon la revendication 35, dans lequel les moyens de refroidissement comprennent des moyens pour faire circuler un fluide de refroidissement ou d'autres moyens de réfrigération.

37. Dispositif selon la revendication 21, dans lequel le dispositif comprend en outre des moyens pour former une paire de matrices de moule définies par une paire d'insertions opposées, espacées l'une de l'autre, et configurées pour définir les faces opposées d'une paire de lentilles optiques, et ayant une pluralité de talons de lavage entourant chaque matrice de moule, les pièces mobiles étant associées à une plaque commune pour garantir un déplacement cohérent et coordonné de celles-ci.
